(19) Europäisches Patentamt
European Patent Office
Office européen des brevets

(11) Publication number: 0 001 748 B1

(12) **EUROPEAN PATENT SPECIFICATION**

(45) Date of publication of patent specification: 12.05.82

(51) Int. Cl.³: C 08 G 79/02, C 08 L 85/02

(21) Application number: 78100992.3

(22) Date of filing: 26.09.78

(54) **A process for improving the physical properties of phosphazene ester polymers by chemical modification with amines.**

(30) Priority: 20.10.77 US 844018

(43) Date of publication of application: 16.05.79 Bulletin 79/10

(45) Publication of the grant of the patent: 12.05.82 Bulletin 82/19

(84) Designated Contracting States: BE DE FR GB NL

(56) References cited:
DE - A - 2 439 534
DE - B - 1 301 469
FR - A - 2 215 446
GB - A - 1 047 052

(73) Proprietor: THE FIRESTONE TIRE & RUBBER COMPANY
1200 Firestone Parkway
Akron, Ohio 44317 (US)

(72) Inventor: Fieldhouse, John William
2454 Sunny Brook Road
Mogadore Ohio 44260 (US)

(74) Representative: Kraus, Walter, Dr. et al,
Patentanwälte Dres. Kraus & Weisert
Irmgardstrasse 15
D-8000 München 71 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 001 748 B1

# A process for improving the physical properties of phosphazene ester polymers by chemical modification with amines

This invention relates to a process for improving the physical properties of phosphazene polymers which are initially tough fibrous materials represented by the general formula

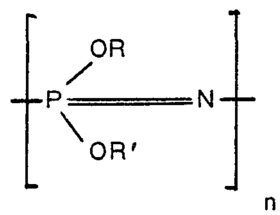

in which R and R′ are each selected from alkyl, alkylaryl, aryl any of which may be either substituted or unsubstituted and need not be the same and n is an integer of at least 20 and in which some of the R or R′ groups may contain some unsaturation to facilitate curing the products.

Phosphazene polymers of this kind are described, e.g., in US - A 3,370,020; US - A 3,515,688; US - A 3,700,629; US - A 3,702,833; US - A 3,856,712; US - A 3,856,713; US - A 3,853,794; US - A 3,883,451 and US - A 3,970,533.

It appears that when such derivatized polymers have been prepared from polydihalophosphazenes which have been recovered as described in US - A 3,755,537, the resulting derivatized polyphosphazene is tough and leathery.

Depending on the manner in which they are produced such polymers may vary from elastomers, which are readily compounded and processed with equipment commonly used for the processing of rubber, to tough leathery materials which are not responsive to processing without special measures which render them economically unattractive, especially as compared to their elastomeric counterparts.

The use of certain amines in connection with polyphosphazene compounds is already mentioned in GB - A 1,047,052; GB - A 1,241,346 and FR - A 2,215,446. The phosphazene starting materials of these prior art processes, however, are different from the phosphazene polymers used in the present invention. Thus, GB - A 1,241,346 describes merely the reaction of the phosphonitrile chloride cyclic trimer with aromatic compounds which include phenols, diphenols, aromatic primary amines or diamines or an aminophenol, whilst FR - A 2,215,446 is directed to the reaction of specific amines with chlorine containing partial esters of phosphonitrile polymers. GB - A 1,047,052 discloses a process for purifying an uncured aromatized polyphosphonitrilic resinous material comprising washing the uncured resinous material in a softened or fused state with water. Although this prior art reference mentions condensation products of polyphosphonitrile halides and aromatic amines, the technical teaching of this citation is limited to washing the resinous material with water in order to remove unreacted phosphonitrilic chloride, unreacted aromatic compounds and hydrogen chloride.

The object of the present invention is to chemically treat these polyphosphazenes which are tough, leathery or fibrous materials and which are not readily workable in conventional processing equipment such as Banbury or Brabender mixers, so as to render them amenable to working on such equipment.

This object is accomplished by the invention by chemically treating the phosphazene polymer with between 1 and 10 parts by weight of an alkyl aryl amine per 100 parts by weight of phosphazene polymer, said amine being selected from

(a) N,N′-alkyl-disubstituted p-phenylenediamines;
(b) alkyl-substituted 1,2-dihydro-2,2,4-trimethyl quinolines; and
(c) alkyl-substituted diphenylamines;

and recovering the amine modified phosphazene polymer as a relatively soft, readily processed elastomer.

Thus, the desired improvement results from chemically treating the tough, leathery phosphazene polymer with certain organic amines.

The resulting product, containing a small but significant amount of said organic amine, particularly an amine with at least one alkyl and at least one aryl substituent on the nitrogen atom exhibits a greatly enhanced processability as compared with the original polyphosphazene. Amines which exhibit very low vapor pressures at temperatures below about 200 and 300°C are particularly preferred in the practice of this invention.

The range of amine addition to the polymers is between 1 and 10 parts by weight per 100 parts of leathery polymer with a range of between 2.5 and 5 parts by weight of amine per 100 parts of polymer being preferred. Addition of amounts greater than 10 parts by weight per 100 of polymer merely increase the expense and do not appear to confer any additional benefits. Addition below 1 part by weight per 100 are not effective for the desired improvement.

The amine treatment may be carried out in solution at temperatures between 0°C and 105°C or

by direct addition to the polymer, e.g. on a rubber mill. Solvents which may be used when the treatment is carried out in solution include benzene, toluene, chlorobenzene and other aromatics, the choice being dependent on the polymer and the amine.

The preferred amine is Santoflex DD which is 6-dodecyl-1,2-dihydro-2,2,4-trimethyl quinoline. Santoflex DD is a registered trade mark.

The invention will be better understood from the description which follows in which preferred embodiments of the invention are set forth by way of example and are not intended to limit the invention in any way. The parts and proportions in the examples are by weight unless otherwise stated.

Examples 1—7

An aryloxyphosphazene polymer of the type described in US - A 3,853,794 modified to include a small amount of unsaturation as a cure site was prepared in which the substituents were p-ethylphenoxy and phenoxy and o-allylphenoxy in the proportions 42/54/5. The polymer which had been prepared by derivatizing thermally polymerized $(NPCl_2)_3$ after it had been recovered from solution (US - A 3,755,537) was stiff, fibrous and non-resilient with a Mooney Value of 113 (ML/4/212). The same polymer was dissolved in tetrahydrofuran, together with 5.0 parts of each of the following amines, as a 10 weight percent solution and maintained at 80°C until the amine and polymer were completely dissolved in the tetrahydrofuran. All solvent was then removed by conventional techniques leaving behind an amine modified polymer which in every case was soft, elastomeric and resilient.

| Ex. | Amine (Trade Name) | Amine (Chemical Name) |
|---|---|---|
| 1. | Santoflex 77 | N,N'bis(1,4-dimethylpentyl)-p-phenylene diamine |
| 2. | Santoflex DD | 6-dodecyl-1,2-dihydro-2,2,4-trimethyl quinoline |
| 3. | Santoflex 17 | N,N'bis(1-ethyl-3-methyl pentyl)-p-phenylene diamine |
| 4. | Santoflex 77 | N,N'bis(1,4-dimethylpentyl)-p-phenylene diamine |
| 5. | Santoflex 217 | N,N'bis(1-methyl heptyl-p-phenylene diamine |
| 6. | Santoflex 13 | N-phenyl-N'-(1,3-dimethylbutyl)-p-phenylene diamine |
| 7. | Eastozone 3 | N,N'bis(1-ethyl-3-methyl pentyl)-p-phenylene diamine |

Santoflex 77,DD,17,217,13 and Eastozone 3 are registered trade marks.

The elastomeric polymer which is produced as a result of the treatment with the amine was found to be much more readily processed on the usual rubber processing equipment (Bunbury mixer, Brabender mills, and the like) than the orginal tough, leathery polymer, as evidenced by the greater ease with which the amine modified polymer gum stock accepted filler, extenders and other compounding ingredients in a rubber mill mixer, and by its behavior in said equipment.

In addition, the physical properties of the amine treated polymer are improved as compared with the properties of the original untreated polymer.

The following additional examples reported in Table I will serve to further illustrate the invention.

Example 8

62 g of a poly(bis-aryloxy)phosphonitrile polymer prepared as described in Example 1 was dissolved in 36 g tetrahydrofuran (THF) containing 3.1 g Santoflex DD (5.0 parts by weight per 100 parts of polymer). The solution was heated at 80°C for 16 hours. The resulting polymer was soft, very resilient and highly elastomeric in contrast to the original polymer which was tough, fibrous and non-resilient before treatment with the amine.

Examples 9—11

In a similar manner as described in Example 8, a polymer produced in larger quantities was modified with several commercially available amines, namely: Eastozone 31 (Eastozone 31 is a registered trade mark) (5.0 phr); Santoflex 13 (5.0 phr); and Santoflex 77 (5.0 phr). In all cases the original polymer which was tough, fibrous, and non-elastic was converted into soft, resilient elastomer.

Examples 12—15

In a similar manner as descibed in the above examples, a large sample of a poly(bis-aryloxy)phosphonitrile polymer (13) was modified with the following amines: Flectol ODP (Flectol ODP is a registered Trade Mark) at 5.0 phr (14); Santoflex DD at 5.0 phr (15); and Santoflex DD at 2.5 phr (16). The ML/4/212 values are shown below:

| Example | Mooney ML/4/212 |
|---|---|
| 12 | 113 (no amine added) |
| 13 | 17.8 |
| 14 | 14.8 |
| 15 | 25.1 |

A solution of 70g of the same phosphazene polymer in 630 g THF was prepared in a 0.83 1 glass bottle and maintained at 80°C for 15-1/2 hours; this was a 10 weight percent solution.

Examples 16—18

A 50 g sample of the above solution containing 5.0 g of phosphazene polymer, was treated with 0.25 g Eastozone 31 followed by evaporation of the solvent at 55°C at 30 mm Hg vacuum. It was then dried at 100°C for 2 hours 5 minutes. The recovered polymer was soft, elastomeric with a high degree of resilience.

Another 50 grams of the 10 weight percent solution of the phosphazene polymer in THF was treated with 0.25 g of Santoflex 13, followed by evaporation of the solvent at 55°C, 30 mm Hg vacuum. It was then dried at 100°C for 2 hours at 5 mm Hg. The product recovered was soft, elastomeric with a high degree of resilience.

Another 100 grams of the 10 weight percent solution described above was treated with 0.5 g of Santoflex 77 followed by evaporation of the solvent at 55°C, 30 mm Hg. It was dried at 100°C for 2 hours at 5 mm Hg. The recovered polymer was soft, elastomeric and resilient.

Examples 7—18 may be summarized as follows:

| Ex. | Polymer (g) | Solvent | Amine(g) | Amine | (phr) Amine |
|---|---|---|---|---|---|
| 8 | 62 | THF | 3.1 | Santoflex DD | 5.0 |
| 9 | 100 | THF | 5.0 | Eastozone 31 | 5.0 |
| 10 | 100 | THF | 5.0 | Santoflex 13 | 5.0 |
| 11 | 100 | THF | 5.0 | Santoflex 77 | 5.0 |
| 12 | 100 | THF | None | None | None |
| 13 | 100 | THF | 5.0 | Flectol ODP* | 5.0 |
| 14 | 100 | THF | 5.0 | Santoflex DD | 5.0 |
| 15 | 100 | THF | 2.5 | Santoflex DD | 2.5 |
| 16 | 5 | THF | 0.25 | Eastozone 31 | 5.0 |
| 17 | 5 | THF | 0.25 | Santoflex 13 | 5.0 |
| 18 | 10 | THF | 0.5 | Santoflex 77 | 5.0 |

*Flectol ODP is octylated diphenylamine.

Formulations were prepared by compounding 100 parts by weight of polyphosphazene with:

50 parts by weight of hydrated alumina ($Al_2O_3 \cdot 3H_2O$);

50 parts by weight of magnesium hydroxide [$Mg(OH)_2$];

10 parts by weight of Silane Base 6587; and

1 part by weight of Vulcup 40 KE.

Silane Base 6587 is a silica filled methyl-vinyl-phenylpolysiloxane which is added as a processing aid.

Vulcup 40 KE is a peroxide based curing agent based on dicumyl peroxide.

The physical properties of the resulting polymer formulations are given in the Table. In the formulations containing the amine treated polymers of Examples 8, 13, 14 and 15, the amine was added to the polymer as a solution. In the formulations identified as A, B and C, the amine was added

on a mill, no amine addition being made in A, 2.5 parts of amine (Santoflex D) were added in B and 5.0 parts of amine were added in C per 100 parts of polymer.

As shown by the results set forth in the Table, the properties of the polyphosphazenes are improved whether the amine treatment is made by an addition in solution or an addition on a mill and it is not intended that the invention be limited to a specific manner of addition.

TABLE

FORMULATION – 100 Polymer, 50 $Al_2O_3 . 3H_2O$, 50 $Mg(OH)_2$, 10 Silane Base 6587, 1 Vulcup 40 KE

| Polymer | Example 8 | | Ex. 13 | Example 14 | | | Example 15 | | |
|---|---|---|---|---|---|---|---|---|---|
| Cure time at 171°C(350°F) | 10′ | 20′ | 20′ | 5′ | 10′ | 20′ | 5′ | 10′ | 20′ |
| 50% Modulus, bar (psi) | 29,3(425) | 38.0(550) | – | 38.4(557) | 43.3(628) | – | 64.4(935) | 82.3(1194) | 24.1(350) |
| 100% Modulus, bar (psi) | 68,9(1000) | – | – | – | – | – | – | – | 76.5(1110) |
| Tensile, bar (psi) | 68,9(1000) | 65.5(950) | 58.6(850) | 74.1(1075) | 58.6(850) | 53.7(780) | 79.8(1158) | 82.3(1194) | 76.5(1110) |
| Elongation % | 103 | 75 | 40 | 80 | 60 | 45 | 60 | 50 | 100 |

| Polymer | Control A | | | Control B | | Control C | |
|---|---|---|---|---|---|---|---|
| Cure time at 171°C(350°F) | 10′ | 10′ | 20′ | 20′ | 20′ | 20′ | 20′ |
| 50% Modulus, bar (psi) | – | – | – | – | – | – | – |
| 100% Modulus, bar (psi) | – | – | – | – | – | – | – |
| Tensile, bar (psi) | 31.7(460) | 27.6(400) | 14.5(210) | 38.6(560) | 24.1(350) | 34.5(500) | 53.1(770) |
| Elongation % | 10 | 30 | 20 | 30 | 25 | 40 | 40 |

## Claims

1. A process for improving the physical properties of phosphazene polymers which are initially tough fibrous materials represented by the general formula

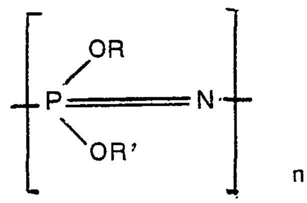

in which R and R′ are each selected from alkyl, alkylaryl, aryl, any of which may be either substituted or unsubstituted and need not be the same and n is an integer of at least 20 and in which some of the R or R′ groups may contain some unsaturation to facilitate curing the products, characterized by chemically treating the phosphazene polymer with between 1 and 10 parts by weight of an alkyl aryl amine per 100 parts by weight of phosphazene polymer, said amine being selected from

(a) N,N′-alkyl-disubstituted p-phenylenediamines;

(b) alkyl-substituted 1,2-dihydro-2,2,4-trimethyl quinolines;

and

(c) alkyl-substituted diphenylamines;

and recovering the amine modified phosphazene polymer as a relatively soft, readily processed elastomer.

2. The process of Claim 1 in which the amine is added to the polymer while the polymer is in solution and the amine modified polymer is recovered by removing the solvent from the solution.

3. The process of Claim 1 in which the amine is added to the polymer on a mill.

4. The process of Claim 1 wherein the polyphosphazene is a poly(bis-aryloxyphosphazene).

5. The process of Claim 1 wherein the amount of amine is between 2.5 and 5 parts by weight per 100 parts of polyphosphazene.

## Revendications

1. Procédé pour améliorer les propriétés physiques de polymères de phosphazène qui se présentent initialement sous forme de matières fibreuses résistantes et sont représentés par la formule générale ci-après:

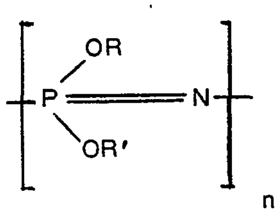

dans laquelle:

R et R′ sont choisis chacun parmi les groupes alkyles, alkylaryles, aryles et peuvent être identiques ou non, et être substitués ou non; et

n est un nombre entier égal à 20 au moins;

et où certains des groupes R ou R′ peuvent contenir une certaine insaturation pour faciliter le durcissement des produits, caractérisé en ce que l'on traite chimiquement le polymère de phosphazène avec 1 à 10 parties en poids d'une alkylarylamine pour 100 parties en poids du polymère de phosphazène, cette amine étant choisie parmi:

a) les p-phénylènediamines disubstituées en N,N′ par des groupes alkyles,

b) les 1,2-dihydro-2,2,4-triméthyl quinoléines substituées par un ou des groupes alkyles, et

c) les diphénylamines substituées par un ou des groupes alkyles,

et en ce que l'on récupère le polymère de phosphazène modifié par l'amine sous la forme d'un élastomère relativement mou, facile à travailler.

2. Procédé selon la Revendication 1, caractérisé en ce que l'amine est ajoutée au polymère alors que celui-ci se trouve en solution, et en ce que l'on récupère le polymère modifié par l'amine en éliminant le solvant de la solution.

3. Procédé selon la Revendication 1, caractérisé en ce que l'amine est ajoutée au polymère dans un broyeur.

4. Procédé selon la Revendication 1, caractérisé en ce que le polymère de phosphazène est un poly(bis-aryloxyphosphazène).

5. Procédé selon la Revendication 1, caractérisé en ce que la quantité d'amine est comprise entre 2,5 et 5 parties en poids pour 100 parties de polymère de phosphazène.

**Patentansprüche**

1. Verfahren zur Verbesserung der physikalischen Eingenschaften von Phosphazenpolymeren, die anfänglich zähe faserartige Materialien der allgemeinen Formel:

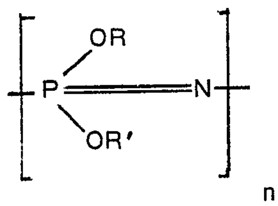

sind, worin R und R′ jeweils aus substituiertem oder unsubstituiertem Alkyl, Alkylaryl, Aryl ausgewählt sind und nicht gleich zu sien brauchen und n eine ganze Zahl von mindestens 20 ist und wobei einige der Gruppen R oder R′ etwas Unsättigung enthalten können, um die Härtung der Produkte zu erleichtern, dadurch gekennzeichnet, daß man das Phosphazenpolymere mit zwischen 1 und 10 Gewichtsteilen eines Alkylarylamins pro 100 Gewichtsteile des Phosphazenpolymeren chemisch behandelt, wobei das Amin aus

(a) N,N′-alkyldisubstituierten p-Phenylendiaminen,

(b) alkylsubstituierten 1,2-Dihydro-2,2,4-trimethyl-chinolinen und

(c) alkylsubstituierten Diphenylaminen

ausgewählt ist, und daß man das aminmodifizierte Phosphazenpolymere als relativ weiches, leicht verarbeitbares Elastomeres gewinnt.

2. Verfahren nach Anspruch 1, dadurch gekennzeichnet, daß man das Amin zu dem Polymeren zufügt, während das Polymere sich in Lösung befindet, und daß man das aminmodifizierte Polymere gewinnt, indem man das Lösungsmittel aus der Lösung entfernt.

3. Verfahren nach Anspruch 1, dadurch gekennzeichnet, daß man das Amin zu dem Polymeren auf einem Walzenstuhl zusetzt.

4. Verfahren nach Anspruch 1, dadurch gekennzeichnet, daß das polyphosphazen ein Poly-(bis-aryloxyphosphazen) ist.

5. Verfahren nach Anspruch 1, dadurch gekennzeichnet, daß die Menge des Amins zwischen 2,5 und 5 Gewichtsteilen pro 100 Teilen Polyphosphazen liegt.